Europäisches Patentamt

**European Patent Office**

Office européen des brevets

(11) Numéro de publication : **0 027 403**
**B1**

(12) **FASCICULE DE BREVET EUROPÉEN**

(45) Date de publication du fascicule du brevet :
08.02.84

(51) Int. Cl.³ : **C 03 C 17/245**

(21) Numéro de dépôt : **80401392.8**

(22) Date de dépôt : **02.10.80**

(54) **Procédé de dépôt d'un film conducteur d'électricité.**

(30) Priorité : **03.10.79 JP 127722/79**

(43) Date de publication de la demande :
**22.04.81 Bulletin 81/16**

(45) Mention de la délivrance du brevet :
**08.02.84 Bulletin 84/06**

(84) Etats contractants désignés :
**BE DE FR GB IT**

(56) Documents cités :
**BE-A- 871 408**
**BE-A- 871 409**
**FR-A- 1 076 213**
**FR-A- 2 298 519**
**US-A- 2 849 339**
**US-A- 4 022 601**
**US-A- 4 147 556**

(73) Titulaire : **SAINT-GOBAIN VITRAGE**
**Les Miroirs 18, avenue d'Alsace**
**F-92400 Courbevoie (FR)**

(72) Inventeur : **Kawahara, Hideo**
**10 Inano-cho 7-chome**
**Itami-shi Hyogo-Ken (JP)**
Inventeur : **Hyodo, Masato**
**11go 18 Danjo-cho 6-chome**
**Nishinomiya-shi Hygo-Ken (JP)**

(74) Mandataire : **Eudes, Marcel et al**
**Saint-Gobain Recherche 39 Quai Lucien Lefranc**
**F-93304 Aubervilliers Cedex (FR)**

Jouve, 18, rue St-Denis, 75001 Paris, France

## Procédé de dépôt d'un film conducteur de l'électricité

La présente invention concerne le dépôt d'un film conducteur de l'électricité à la surface du verre. Plus précisément, elle porte sur l'amélioration des techniques de dépôt d'un film conducteur de l'électricité selon la méthode CVD (dépôt par vaporisation chimique). Des verres revêtus d'un film d'oxyde d'étain, d'oxyde d'indium, etc... transparent et conducteur d'électricité sont largement utilisés en tant que verres anti-buée, électrodes pour des cristaux liquides, etc... exigeant ces deux qualités de transparence et de conduction électrique. En outre, les films conducteurs de l'électricité à faible résistivité superficielle ont de bonnes caractéristiques de réflexion des rayons infra-rouges. De ce fait, les verres pré-cités sont très utiles comme couvercles de capteurs solaires ou isolants transparents tels que corps en nid d'abeille interposés entre leurs collecteurs et leurs couvercles, etc...

Il existe de nombreuses méthodes de dépôt d'un film conducteur de l'électricité à la surface du verre. Mais pour la fabrication en série, les plus appropriées sont de pulvériser sur le verre une solution renfermant en solution les matières premières nécessaires, chauffer à haute température pour provoquer le dépôt d'un film par décomposition thermique, ou selon la méthode CVD, de chauffer et vaporiser ces matières premières avant de mettre cette vapeur en contact avec la surface du verre.

En comparaison avec la première méthode, la seconde a des avantages :

L'épaisseur du film est plus facile à maîtriser, les cristaux obtenus sont plus fins, etc... Elle tend donc à se développer et l'on cherche à en améliorer les performances, pour déposer un film conducteur de l'électricité ayant les meilleurs caractéristiques électriques et optiques.

Il est connu par les brevets BE-A-871 408 et BE-A-871 409 pour déposer sur la surface d'un substrat en verre un film conducteur de l'électricité, en particulier d'oxyde d'étain dopé au fluor, de mettre en contact avec la surface du verre chauffé, une vapeur d'un composé d'étain afin d'y produire sa décomposition, un composé organo fluoré gazeux étant introduit avec la vapeur du composé d'étain.

Pour favoriser la formation d'un composé ayant une liaison directe étain-fluor qui réagira ensuite avec l'oxygène ou l'air au contact du verre chauffé pour réaliser le dépôt d'oxyde d'étain sur le verre, il est connu par le brevet BE-A-871 408 de chauffer le composé d'étain dans son gaz porteur et le composé fluoré, avant leur mise en contact avec le verre, à une température comprises entre 100 et 400 °C.

La demanderesse a constaté que l'on pouvait améliorer les propriétés électriques des films d'indium ou d'étain dopés au fluor déposés, et en particulier abaisser leur résistivité.

Elle propose pour cela d'introduire au contact du verre avec une vapeur de composés d'étain ou d'indium des composés organo fluorés gazeux préalablement chauffés et mis en contact avec un catalyseur tel que le fer, le cuivre, le plomb, etc...

Sans qu'il existe une explication certaine, on peut estimer que les pré-traitements en question transforment les fluorures organiques précités en des produits intermédiaires et que, lors de la mise en contact de ces produits intermédiaires avec la surface du verre chauffé à haute température, les réactions prévues se produisent mieux que si l'on n'a pas recours à de tels pré-traitements. Il est bien entendu qu'il est possible d'obtenir sans eux un effet suffisant, mais ils permettent d'abaisser la température à laquelle le verre doit être chauffé. Il est donc souhaitable de les employer en particulier dans le cas du dépôt d'un film conducteur de l'électricité sur la surface d'un verre mince susceptible de se déformer à la chaleur.

Quant à la vapeur de composés métalliques utilisée selon la conception de cette invention, on peut, selon les besoins, en choisir de nombreux types. Par exemple dans le cas d'un film d'oxyde d'étain, il est possible d'utiliser la vapeur de composés organométalliques tels que $(CH_3)_2 SnCl_2$, $(C_4H_9)_2 SnCl_2$, $Sn(C_2H_5)_4$, $SnO(C_2H_5)_2$, etc... ou bien la vapeur de sels métalliques tels que $SnCl_4$, etc... Pour un film d'oxyde d'indium, on peut utiliser des dérivés d'indium, indium-tri(2,2,6,6-tétraméthylheptane-3,5-dione), acétyl-acétonate $In(C_5H_7O_2)_3$... Pour mettre la vapeur de composés métalliques et les fluorures organiques gazeux en contact avec la surface du verre, on peut les laisser entrer séparément en contact avec le verre. Mais il est plus efficace de projeter sur la surface du verre le gaz porteur mélangé avec la vapeur des composés métalliques et les fluorures organiques gazeux. La température à donner au verre sur lequel on déposera le film varie selon la nature de celui-ci et les matières premières utilisées, mais, en général, il est souhaitable qu'elle soit supérieure à 400 °C. La limite supérieure de la température est liée au ramollissement thermique du verre.

Les constituants, la structure et la forme du verre utilisé sur lequel on dépose selon l'invention un film conducteur de l'électricité ne sont en aucun cas limités.

Par exemple, la surface du verre peut même être revêtue d'un film d'oxyde de silicium. Le revêtement préalable du verre avec ce film peut empêcher la migration des ions alcalins du verre en tant qu'impuretés dans le film conducteur de l'électricité et assurer ainsi une qualité stable des films.

L'invention sera maintenant décrite plus en détail, en référence aux figures qui représentent :

Figure 1 un plan schématique d'un équipement utilisé selon la conception de cette invention,

Figure 2 un graphique montrant l'effet de cette invention.

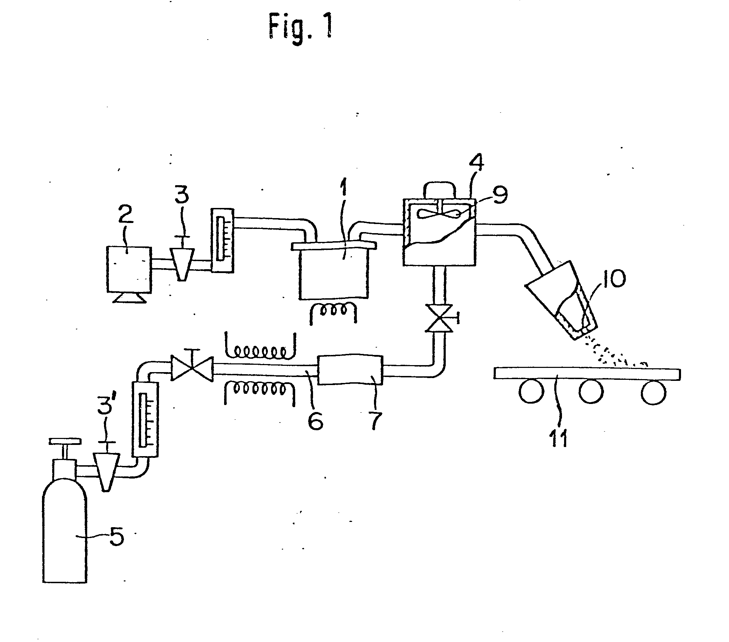

La Figure 1 montre un évaporateur (1) qui engendre la vapeur des composés métalliques destinée à créer le film conducteur de l'électricité. Le gaz porteur est de l'air produit par un compresseur d'air (2), envoyé vers l'évaporateur (1) sous une pression réglée par un détendeur (3) à la valeur voulue. La vapeur des composés métalliques est transportée par ce gaz porteur vers un mélangeur (4).

D'autre part, les fluorures organiques gazeux sortant d'une bouteille (5) sont pré-chauffés à une température prévue dans un tuyau de chauffage (6) après passage par un détendeur (3'), puis envoyés dans un tube rempli du catalyseur (7) et enfin dans le mélangeur (4).

Il est possible d'employer des fluorures organiques répondant à la formule générale suivante :

$$C_n H_m Cl_x F_y \ (n = 1, 2, \text{---}, \ m = 0, 1, 2, \text{---},$$
$$x = 0, 1, 2, \text{---}, \ y = 1, 2, \text{---}),$$

ainsi $CCl_2F_2$, $CHCl F_2$ et $CH_3\text{---}CHF_2$ sont tout à fait appropriés.

Le mélangeur (4) équipé d'un agitateur (9) mû par un dispositif extérieur brasse intimement les fluorures organiques, le gaz porteur et la vapeur des composés métalliques. Ce mélange de gaz projeté en biais par une buse (10) en forme de fente montée à l'extrémité de la tuyauterie, sur la surface du verre (11) chauffé et entraîné, donne naissance à un film conducteur de l'électricité.

Exemple

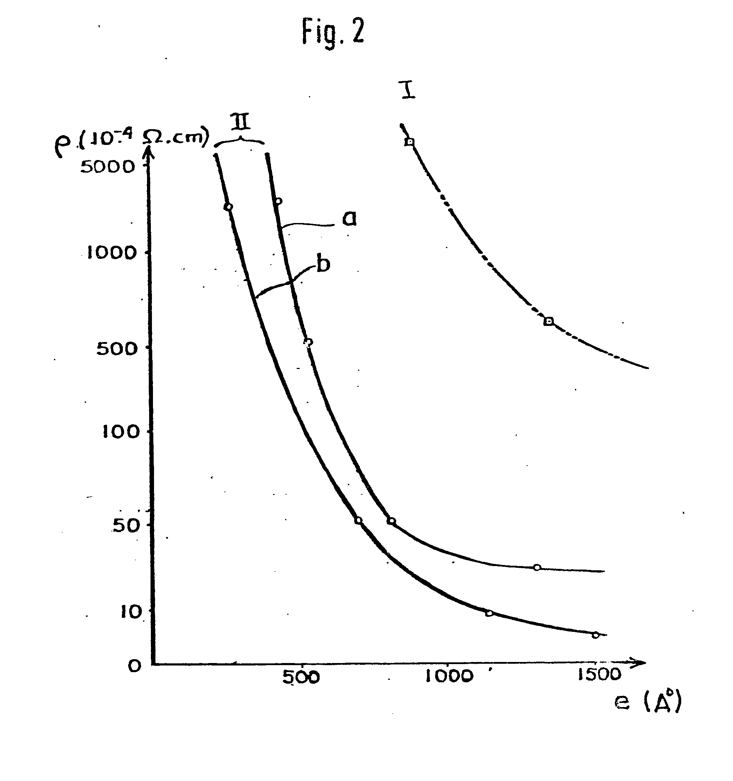

Utilisant la vapeur de dichlorure de diméthyl-étain $(CH_3)_2SnCl_2$ en tant que vapeur de composé métallique et $CCl_2F_2$ (nom commercial « DIFLON 22 ») en tant que fluorure organique, on dispose au moyen de l'équipement indiqué à la Figure 1, divers films d'oxyde d'étain, conducteurs de l'électricité, dont on mesure ensuite la résistivité. Les résultats de ces mesures sont indiqués à la Figure 2.

Dans cette Figure 2, l'abscisse représente l'épaisseur e, exprimée en angstroems, des films conducteurs de l'électricité et l'ordonnée représente la résistivité ρ, des films sur l'échelle logarithmique. L'exemple comparatif I se trouvant dans cette figure représente les résultats du film obtenu selon la méthode classique sans emploi des fluorures organiques gazeux. Les courbes II sont des exemples de cette invention :

a) représente le cas où l'on n'a pas pré-chauffé le fluorure organique gazeux, ni ne l'a mis en contact avec le catalyseur,

b) représente le cas où l'on a effectué le pré-chauffage et le passage dans la couche de catalyseur.

Dans les deux cas précités, la température superficielle du verre était de 550 °C, le débit de l'air porteur était de 70 litres/minute, le dosage du fluorure organique était de 30 litres/minute, la distance entre la buse 10 en forme de fente et le verre était de 20 mm et l'angle de projection des gaz par rapport à la normale au verre était d'environ 30 degrés.

D'après les résultats précités, il est clair que selon la méthode de cette invention on peut réduire considérablement la résistivité des films conducteurs de l'électricité et améliorer les résultats par le pré-chauffage des fluorures et la mise en contact de ceux-ci avec le catalyseur.

**Revendications**

1. Procédé de dépôt d'un film d'oxyde d'étain ou d'oxyde d'indium conducteur de l'électricité sur la surface du verre, consistant à mettre une vapeur de composés d'étain ou d'indium en contact avec la surface du verre chauffé pour y produire leur décomposition thermique et caractérisé en ce que des composés organo fluorés gazeux sont introduits au contact du verre avec la vapeur précitée, lesdits composés organo fluorés étant chauffés et mis en contact avec un catalyseur avant leur rencontre avec le verre pour accélérer leur décomposition.

2. Procédé selon la revendication 1, caractérisé en ce que les composés organo fluorés sont mis en contact avec du fer, du cuivre ou du plomb.

3. Procédé selon l'une des revendications précédentes caractérisé en ce que les composés organo fluorés sont chauffés à une température comprise entre 100 et 400 °C.

**Claims**

1. Method of depositing an electrically conducting film of tin oxide or indium oxide on a glass surface, consisting of putting a vapour of a tin or indium compound in contact with the glass surface which is heated to cause thermal decomposition thereof and characterised in that a gaseous organic fluorocompound is brought into contact with the glass with said vapour, said gaseous organic fluorocompound being heated and brought into contact with a catalyst before contact with the glass to accelerate its decomposition.

2. Method according to claim 1, characterised in that the organic fluorocompound is brought into contact with iron, copper or lead.

3. Method according to one of the preceding claims, characterised in that the organic fluorocompound is heated at a temperature from 100 to 400 °C.

**Ansprüche**

1. Verfahren zum Niederschlagen eines elektrisch leitenden Zinnoxid- oder Indiumoxidfilmes auf einer Glasoberfläche, bei dem ein Dampf einer Zinn- oder Indiumverbindung mit der Glasoberfläche in Kontakt gebracht wird, um dort seine thermische Zersetzung zu erzeugen, dadurch gekennzeichnet, daß gasförmige Organofluorverbindungen mit den vorgenannten Dämpfen in Kontakt mit dem Glas eingeführt werden, wobei die Organofluorverbindungen vor ihrem Zusammentreffen mit dem Glas zur Beschleunigung ihrer Zersetzung erwärmt und in Kontakt mit einem Katalysator gebracht werden.

2. Verfahren nach Anspruch 1, dadurch gekennzeichnet, daß die Organofluorverbindungen mit Eisen, Kupfer oder Blei in Kontakt gebracht werden.

3. Verfahren nach einem der vorhergehenden Ansprüche, dadurch gekennzeichnet, daß die Organofluorverbindungen auf eine Temperatur zwischen 100 und 400 °C erhitzt werden.

Fig. 1

Fig. 2